# EUROPÄISCHE PATENTSCHRIFT

(11) **EP 0 400 732 B1**
(45) Veröffentlichungstag und Bekanntmachung des Hinweises auf die Patenterteilung: **15.11.1995**
(21) Anmeldenummer: 90201318.4
(22) Anmeldetag: 25.05.1990
(51) Int. Cl.: G02B 6/38

(54) **Verbindungsstecker für einen Lichtwellenleiter**
Connecting plug for an optical fiber
Fiche de connexion pour une fibre optique

(30) Priorität: 31.05.1989 DE 3917664
(43) Veröffentlichungstag der Anmeldung: 05.12.1990
(73) Patentinhaber: Alcatel Kabel AG & Co., 30179 Hannover (DE)
(72) Erfinder: Grosse-Boes, Hans-Georg, D-5024 Pulheim-Sinnersdorf (DE)
(74) Vertreter: Mende, Eberhard, Dipl.-Ing.

(56) Entgegenhaltungen:
- EP-A- 0 010 505
- EP-A- 0 086 266
- EP-A- 0 246 165
- US-A- 4 168 109
- PATENT ABSTRACTS OF JAPAN, Band 8, Nr. 65 (P-263)[1502], 27. März 1984; & JP-A-58 211 725

## Beschreibung

Die Erfindung bezieht sich auf einen Verbindungsstecker für einen in einer Aderhülle verschiebbar geführten Lichtwellenleiter (LWL) mit einem Gehäuse, innerhalb dessen ein den LWL aufnehmendes Steckerelement mit radialem Spiel und entgegen einer Schraubenfeder axial beweglich angeordnet ist, wobei der Lichtwellenleiter in einem die axiale Verschiebbarkeit zulassenden Verschieberaum zwischen dem Steckerelement und einer rückwärtigen Wandung des Gehäuses frei und mit radialem Spiel geführt ist.

Bei einem durch die EP-A 86 266 bekannten derartigen Stecker zeigte sich, daß der LWL beim Zurückschieben des Steckerelements, wie es beim Einkoppeln in ein Kupplungselement geschieht, zu stark gekrümmt oder gar geknickt werden kann. Der LWL wird dabei nicht wunschgemäß in die Aderhülle zurückgeführt, so daß im Verbindungsstecker gekrümmte Bereiche verbleiben.

Der Erfindung liegt die Aufgabe zugrunde, den Verbindungsstecker der eingangs genannten Art derart zu gestalten, daß Knickungen des LWL und/oder Zusatzdämpfungen verursachende Krümmungen vermieden werden.

Die Lösung besteht darin, daß der LWL im Verschieberaum innerhalb der Schraubenfeder von einer Hülse umgeben ist, welche gegenüber dem LWL, gegenüber der Schraubenfeder und gegenüber weiteren Bauteilen des Verbindungssteckers radial und axial beweglich angeordnet ist, und daß der Innendurchmesser der Hülse größer als das 1,5- fache und kleiner als das 3- fache des Außendurchmessers des LWL ist.

Die Hülse verhindert zu kleine Krümmungsradien des LWL und ermöglicht, daß Winkelunterschiede zwischen den Achsverläufen des LWL im rückwärtigen Teil des Steckergehäuses und im Steckerelement mit gleichmäßig sanfter Krümmung über einen langen Weg selbst dann aufgenommen werden, wenn auf den LWL beim Zurückschieben des Steckerelements eine Schubkraft ausgeübt wird.

Bei einer beispielsweise durch die EP-A 86 266 bekannten Ausführungsform, bei welcher die Feder als Schraubenfeder den Verschieberaum umgibt, sollte der Außendurchmesser der Hülse kleiner als der Innendurchmesser der Schraubenfeder sein, damit die radiale Beweglichkeit der Hülse im Verschieberaum gesichert ist.

Der Innendurchmesser der Hülse ist größer als der Außendurchmesser des LWL, damit Relativbewegungen möglich sind.

Die Hülse darf natürlich axial nur so lang sein, daß die axiale Beweglichkeit des Steckerelements im gewünschten Ausmaß möglich ist.

Die der Erfindung zugrundeliegende Aufgabe wird besonders vorteilhaft durch die Weiterbildung gelöst, daß das Steckerelement eine Bohrung aufweist, in welcher der LWL mit radialem Spiel geführt ist, und deren Durchmesser kleiner als der Innendurchmesser der Hülse ist. In gleichem Sinne wirkt die vorteilhafte Maßnahme, daß der Innendurchmesser der Hülse kleiner als der Innendurchmesser einer im rückwärtigen Teil des Steckergehäuses befindlichen, den LWL mit radialem Spiel aufnehmenden Bohrung ist. Es hat sich gezeigt, daß eine Vergrößerung der den LWL im Steckerelement umgebenden Hülsenabschnitte zum rückwärtigen Ende des Verbindungssteckers hin eine besonders sanfte Rückführung des LWL in seine mit dem Verbindungsstecker verbundene Hülle ermöglicht. Zu diesem Zweck hat es sich weiterhin als vorteilhaft erwiesen, daß die Hülse aus mindestens zwei gegeneinander beweglichen Teilhülsen besteht.

Die Erfindung wird anhand der Zeichnung näher erläutert.

Fig. 1 zeigt einen Längsschnitt durch einen schematisch und nicht maßstäblich gezeichneten Verbindungsstecker.

Fig. 2 zeigt Krümmungsverläufe des LWL im Verschiebraum bei einer Ausführung mit einer erfindungsgemäß vorgesehenen Hülse im Vergleich zu einer bekannten Ausführung.

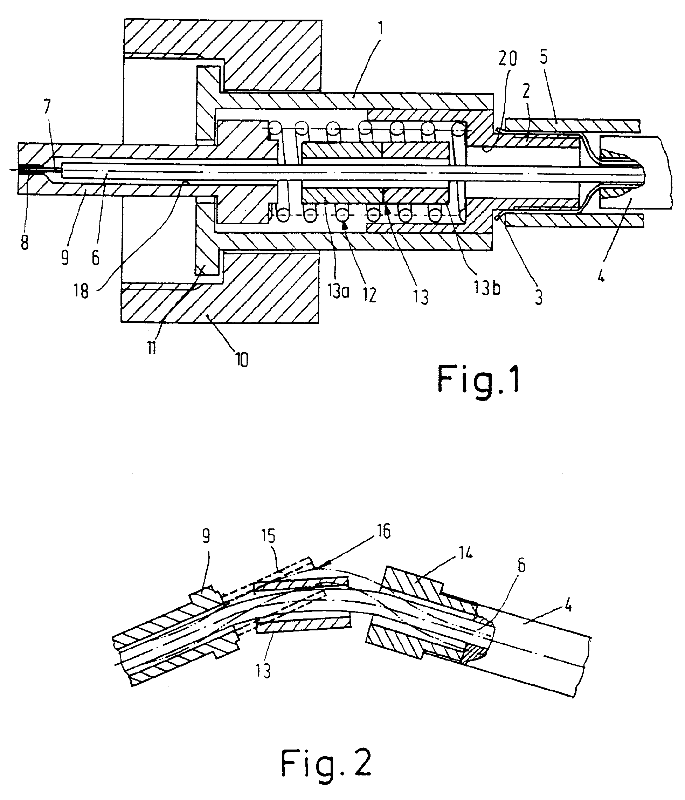

Mit dem Gehäuse 1 des in Fig. 1 dargestellten Verbindungssteckers ist ein Zugaufnahmeansatz 2 starr verbunden, an welchem in bekannter Weise Zugentlastungselemente 3 einer den LWL 6 gleitfähig umgebenen Hülle 4 mittels einer Crimphülse 5 festgelegt sind.

Der LWL 6 ist im Endbereich 7 zumindest von seiner sekundären Beschichtung befreit und dort zentrisch in eine Aufnahmebohrung 8 eines Steckerelements 9 eingeklebt. Beim Ankoppeln des dargestellten Verbindungssteckers wird das Steckerelement 9 in eine nicht dargestellte Kupplungshülse bis zum Anschlag an ein Gegensteckerelement eingeführt. Der Verbindungsstecker 9 wird dabei in einer Aufnahmebohrung der Kupplungshülse zwangsgeführt und muß deshalb im Gehäuse 1 des in Fig. 1 dargestellten Verbindungssteckers radial beweglich angeordnet sein. Beim Verschrauben des Verbindungssteckers mittels der Überwurfmutter 10 an der Kupplungshülse wird das Steckerelement 9 von dem Anschlagring 11 des Gehäuses 1 weg entgegen der Kraft der Schraubenfeder 12 in den Verbindungsstecker gedrückt. Dabei soll der LWL 6 in seine HÜlle 4 zurückgeschoben werden. Dazu sind Schubkräfte erforderlich, welche den LWL 6 im frei geführten Bereich innerhalb des Verbindungssteckers krümmend auslenken können. Die gemäß einer ersten Lösung der vorliegenden Erfindung sowohl radial als auch axial frei beweglich zwischen dem LWL 6 und der Schraubenfeder 12 angeordnete Hülse 13 erlaubt einerseits eine erforderliche Krümmung des LWL 6, wenn das Steckerelement 9 beim Kupplungsvorgang eine Winkelauslenkung erfährt. Andererseits verhindert die Hülse 13 zu scharfe Krümmungen oder gar Knickungen des LWL 6. Knickungen können, insbesondere wenn sie häufiger entstehen, zu einem Bruch des LWL 6 führen, so daß die Lebensdauer des Verbindungssteckers verkürzt wird.

Unzulässig kleine Krümmungsradien, welche auch nach dem Kupplungsvorgang im Steckerelement verbleiben, können zu erhöhten Dämpfungen führen. Durch die erfindungsgemäß eingefügte Hülse 13 wird erreicht, daß nur sanfte Krümmungen entstehen können. Nach dem Ankuppeln des Verbindungssteckers an eine Kupplungshülse kann der LWL 6 leicht in die Hülle 4 zurückgleiten, so daß er schließlich wieder nahezu krümmungsfrei innerhalb des Steckverbinders verläuft. Diese vorteilhafte Wirkung der Hülse 13 wird dadurch verstärkt, daß sie aus zwei gegeneinander beweglichen Teilhülsen 13a und 13b besteht.

Fig. 2 deutet den Krümmungsverlauf eines LWL 6 bei winkelgeneigter Gegeneinanderführung des Steckerelements 9 und eines Gehäuseteils 14 an. Ein sanfter Krümmungsverlauf ergibt sich bei erfindungsgemäß vorgesehener Hülse 13. Ein schärferer Krümmungsverlauf des LWL 6 gemäß dem strichpunktierten Verlauf entsteht, wenn ein gestrichelt gezeichneter Hülsenansatz 15 starr am Steckerelement 9 angeordnet ist. Dabei besteht insbesondere an den Endkanten des Hülsenansatzes 5 an der Stelle 16 eine erhebliche Knickgefahr.

Beim Ausführungsbeispiel nach Fig. 1 wurde der Innendurchmesser der Hülse 13 doppelt so groß wie der Außendurchmesser des LWL 6 gewählt. Er wurde weiterhin größer als der Durchmesser der den LWL 6 beweglich aufnehmenden Bohrung 18 des Steckerelements 9 gewählt. Als günstig erwiesen sich Durchmesserunterschiede von 0,2 bis 0,3 mm. Im gleichen Ausmaß ist der Durchmesser der Bohrung 20 des Zugaufnahmeansatzes 2 am Ende des Verbindungssteckers gegenüber dem Innendurchmesser der Hülse 13 vergrößert.

## Patentansprüche

1. Verbindungsstecker für einen in einer Aderhülle (4) verschiebbar geführten Lichtwellenleiter (LWL) mit einem Gehäuse (1), innerhalb dessen ein den LWL (6) aufnehmendes Steckerelement (9) mit radialem Spiel und entgegen einer Schraubenfeder (12) axial beweglich angeordnet ist, wobei der Lichtwellenleiter (6) in einem die axiale Verschiebbarkeit zulassenden Verschieberaum zwischen dem Steckerelement (9) und einer rückwärtigen Wandung des Gehäuses (1) frei und mit radialem Spiel geführt ist,
dadurch gekennzeichnet,
daß der LWL (6) im Verschieberaum innerhalb der Schraubenfeder (12) von einer Hülse (13) umgeben ist, welche gegenüber dem LWL (6), gegenüber der Schraubenfeder (12) und gegenüber weiteren Bauteilen des Verbindungssteckers radial und axial beweglich angeordnet ist, und daß der Innendurchmesser der Hülse (13) größer als das 1,5- fache und kleiner als das 3- fache des Außendurchmessers des LWL (6) ist.

2. Verbindungsstecker nach Anspruch 1,
dadurch gekennzeichnet,
daß das Steckerelement (9) eine Bohrung aufweist, in welcher der LWL (6) mit radialem Spiel geführt ist, und deren Durchmesser kleiner als der Innendurchmesser der Hülse ist.

3. Verbindunsstecker nach Anspruch 1 oder 2,
dadurch gekennzeichnet,
daß der Innendurchmesser der Hülse (13) kleiner als der Innendurchmesser einer im rückwärtigen Teil des Steckergehäuses (1) befindlichen, den LWL (6) mit radialem Spiel aufnehmenden Bohrung (20) ist.

4. Verbindungsstecker nach einem der Ansprüche 1 bis 3,
dadurch gekennzeichnet,
daß die Hülse (13) aus mindestens zwei gegeneinander beweglichen Teilhülsen (13a, 13b) besteht.

## Claims

1. A connector for an optical waveguide (LWG) which is inserted capable of sliding into a wire sleeve (4), said connector comprising a housing (1) within which a connector element (9) accommodating the LWG (6) is arranged with radial play and axial movement against the action of a helical spring (12), the optical waveguide (6) being inserted freely and with radial play into a slide space formed between the connector element (9) and a rear wall of the housing (1) and permitting the axial sliding motion,
characterized in that
the LWG (6) is enveloped in the slide space within the helical spring (12) by a sleeve (13) which is arranged radially and axially movable relative to the LWG (6), relative to the helical spring (12) and relative to other components of the connector, and in that the inner diameter of the sleeve (13) is larger than 1,5 times and smaller than 3 times the outer diameter of the LWG (6).

2. A connector as claimed in Claim 1,
characterized in that
the connector element (9) has a hole in which the LWG (6) is inserted with radial play, and whose diameter is smaller than the inner diameter of the sleeve.

3. A connector as claimed in Claim 1 or 2,
characterized in that
the inner diameter of the sleeve (13) is smaller than the inner diameter of a hole (20) which is provided in the rear portion of the connector housing (1) and accommodates the LWG (6) with radial play.

4. A connector as claimed in any one of Claims 1 to 3,
characterized in that
the sleeve (13) consists of at least two partial sleeves (13a, 13b) which are movable relative to each other.

## Revendications

1. Fiche de connexion pour une fibre optique guidée à coulissement dans une gaine (4) avec un boîtier (1) à l'intérieur duquel un élément connecteur (9) logeant la fibre optique (6) est disposé avec un jeu radial et de manière mobile axialement contre un ressort cylindrique (12), la fibre optique (6) étant guidée librement et avec un jeu radial dans un espace de glissement permettant un glissement axial entre l'élément connecteur (9) et une paroi postérieure du boîtier (1), caractérisée en ce que la fibre optique (6) dans l'espace de glissement à l'intérieur du ressort cylindrique (12) est entourée par un manchon (13) qui est disposé de manière mobile radialement et axialement par rapport à la fibre optique (6), par rapport au ressort cylindrique (12) et par rapport aux autres éléments de la fiche de connexion et en ce que le diamètre interne du manchon (13) est supérieur à 1,5 fois et inférieur à 3 fois le diamètre externe de la fibre optique (6).

2. Fiche de connexion selon la revendication 1, caractérisée en ce que l'élément connecteur (9) présente un alésage dans lequel la fibre optique (6) est guidée avec un jeu radial et dont le diamètre est inférieur au diamètre interne du manchon.

3. Fiche de connexion selon la revendication 1 ou 2, caractérisée en ce que le diamètre interne du manchon (13) est inférieur au diamètre interne d'un alésage situé dans la partie postérieure du boîtier (1) du connecteur et logeant la fibre optique (6) avec un jeu radial.

4. Fiche de connexion selon l'une des revendications 1 à 3, caractérisée en ce que le manchon (13) se compose d'au moins deux parties de manchon (13a, 13b), mobiles l'une par rapport à l'autre.
